# EUROPEAN PATENT SPECIFICATION

(11) **EP 4 201 834 B1**
(45) Date of publication and mention of the grant of the patent: **04.12.2024**
(21) Application number: 21858193.2
(22) Date of filing: 06.08.2021
(51) Int. Cl.: B65D 63/10, B32B 27/00, C09J 7/29, C09J 7/38, C09J 201/00, H02G 3/04, F16L 3/137, B32B 5/02, B32B 27/30, B32B 27/32, B32B 27/12, C09J 7/21, H02G 3/30

(54) **BINDING TAPE**
BINDEBAND
BANDE ADHÉSIVE

(30) Priority: 18.08.2020 JP 2020137887
(43) Date of publication of application: 28.06.2023
(73) Proprietor: Denka Company Limited, Tokyo 103-8338 (JP)
(72) Inventor: TATE, Yosuke, Tokyo 103-8338 (JP); YAMAMOTO, Yoshiaki, Tokyo 103-8338 (JP); YOSHIMURA, Daisuke, Tokyo 103-8338 (JP)
(74) Representative: Murgitroyd & Company
(86) International application number: PCT/JP2021/029244
(87) International publication number: WO 2022/039046

(56) References cited:
- WO-A1-00/78883
- WO-A1-2020/066678
- WO-A1-2020/213521
- WO-A1-2020/213521
- JP-A- 2002 327 362
- JP-A- 2002 327 362
- JP-A- 2003 503 538
- JP-A- 2011 088 654
- JP-A- 2019 218 420

## Description

### TECHNICAL FIELD

The present invention relates to a binding tape.

### BACKGROUND

In wiring of automobiles, etc., electrical wires bundled into a prescribed shape using a binding tape are used. From the perspective of preventing electrical wires coming into contact with a surrounding wall or interior material and becoming damaged, excellent abrasion resistance is demanded of tapes for binding electrical wires, etc. Meanwhile, from the perspective of workability when binding electrical wires, manual tearing properties are also required to be good. "Manual tearing properties" means a performance that enables a tape to be cut easily by hand without using a tool such as a cutter.

As binding tapes with high abrasion resistance, for example, a binding tape which uses a polyethylene terephthalate (PET) knitted fabric as a substrate, and a binding tape comprising a substrate in which a resin film and a non-woven fabric having a specific thickness are bonded to one another, etc., have been proposed (for example, in JP 2010 154634 A and JP 2009 137296 A).

However, there is a problem in that these binding tapes have poor manual tearing properties and cutting the tapes requires the use of a specialized jig, and thus, the number of work steps at the time of binding increase.

As a binding tape that is provided with both abrasion resistance and manual tearing properties, JP 2010 225327 A proposes an electrical wire protective member comprising: a substrate formed as a three-layer structure in which two fabrics are bonded to one another using an adhesive; and an adhesive layer. Further, JP 2019 119458 A proposes a binding tape comprising: a fiber layer in which a woven fabric or a knitted fabric is interposed between two resin films having abrasion resistance; and an adhesive layer.

Further the disclosures of WO 2020/213521 A1 and WO 2020/066678 A1 may be helpful for understanding the present invention.

WO 2020/213521 A1 refers to a binding tape which has sound deadening properties, can suppress layer separation and is also excellent in abrasion resistance. The binding tape includes a substrate layer made from a non-woven fabric and an adhesive layer, wherein the substrate layer includes at least two types of fused sections having different shapes. The fused sections are preferably formed by thermally fusing fibers of the non-woven fabric by a heat embossing. Further, the binding tape preferably has a scrape abrasion resistance repetition number of 100 times or more.

WO 2020/066678 A1 discloses a pressure-sensitive adhesive tape being excellent in terms of alkali resistance, conformability to recesses and protrusions asd well as durability. The pressure-sensitive adhesive tape comprises a substrate layer and a pressure-sensitive adhesive layer disposed on at least one side of the substrate layer, wherein the substrate layer comprises fibers having a core-sheath structure.

JP 2002 327362 A provides a support for adhesive tapes, comprising a non-woven fabric especially improved in easiness of tear by hand.

WO 00/78883 A1 provides a pressure-sensitive adhesive article including a non-woven backing having a first surface and a second surface; and a pressure sensitive adhesive coated on the first surface of the backing, wherein the backing comprises an embossed pattern on a first fibrous web.

### SUMMARY OF THE INVENTION

### TECHNICAL PROBLEM

However, neither the electrical wire protective member disclosed in JP 2010 225327A nor the binding tape disclosed in JP 2019 119458 A is sufficiently provided with both abrasion resistance and manual tearing properties.

Further, in recent years, higher abrasion resistance is demanded for use in wiring of automobiles, etc. That is, binding tapes that are able to achieve an abrasion repetition number of 100 times or more in a scrape abrasion test are demanded. However, conventional binding tapes have a problem of not being able to pass the abrasion test described above.

Thus, the objective of the present invention is to provide a binding tape that has high abrasion resistance and also has good manual tearing properties.

### SOLUTION TO PROBLEM

As a result of diligent research into the problem described above, the present inventors discovered that by using a substrate layer comprising a non-woven fabric and a resin layer, and forming in the non-woven fabric at least two types of fused sections having different shapes, it is possible to solve the entirety of the aforementioned problem, which led to the completion of the present invention.

The present invention refers thus to a binding tape according to claim 1. Advantageous embodiments may include features of depending claims.

### EFFECTS OF INVENTION

According to the present invention, it is possible to provide a binding tape that has high abrasion resistance and also has good manual tearing properties.

### BRIEF DESCRIPTION OF DRAWINGS

FIG. 1 is a cross-sectional view representing one embodiment of the binding tape according to the present invention.
FIG. 2 is an optical micrograph showing one example of the binding tape according to the present invention.

### DESCRIPTION OF EMBODIMENTS

The present invention shall be explained in detail below. However, the present invention is not limited to the following embodiments.

### [Binding tape]

The binding tape according to the present invention is a binding tape according to claim 1. Such a binding tape has high abrasion resistance and also has good manual tearing properties. Note that "manual tearing properties" in the present description means a performance that enables the binding tape to be cut easily by hand in the width direction without using a specialized jig. Further, "width direction" herein means a direction, in the binding tape in a state of being wound in a roll shape, orthogonal to the direction (length direction) when the tape is drawn out. In the present description, "width direction" is also described as "TD direction" and length direction is also described as "MD direction".

### (Substrate layer)

The substrate layer of the binding tape according to the present invention comprises a non-woven fabric and a resin layer laminated onto one surface of the non-woven fabric. Further, the non-woven fabric is provided with at least two types of fused sections having different shapes.

### <Non-woven fabric>

The non-woven fabric is provided with at least two types of fused sections having different shapes. The fused sections are formed as recessed sections in the non-woven fabric surface by joining fibers constituting the non-woven fabric to one another. The fused sections may be formed by a mechanical process and may be formed by an embossing process. In one embodiment of the present invention, the fused sections are preferably formed by thermally fusing fibers of the non-woven fabric by a hot embossing process. Due to having such fused sections, manual tearing properties of the binding tape become good. Furthermore, horizontal direction stress relaxation that acts during abrasion becomes large and abrasion resistance is improved.

Further, the fused sections are preferably provided to a "surface on a side on which the resin layer is not laminated" (hereinafter described as the "other surface") of the non-woven fabric. That is, in one preferred embodiment, a resin layer is laminated onto one surface of a non-woven fabric and at least two types of fused sections having different shapes may be provided to the other surface of the non-woven fabric.

In the present invention, "fused sections having different shapes" includes not only fused sections having different shapes, but also fused sections having different sizes (areas). The fused sections that the non-woven fabric has may be fused sections having different areas, may be fused sections having different shapes, and may also include both of the foregoing.

As long as the effects of the present invention are exhibited, the shapes of the fused sections are not particularly limited, and examples thereof include circular shapes (true circles and ellipses), rhomboid shapes (rhombi and similar shapes thereto (but not including squares)), and quadrangles (rectangles, squares, trapezoids, etc.; also including quadrangles with rounded corners). Thereamong, from the perspective of making it easier to provide both manual tearing properties and abrasion resistance, the shapes of the fused sections are preferably circular shapes or quadrangles, and more preferably ellipses, rectangles, or a combination thereof.

### (Fused sections 1 and 2)

The fused sections include a fused section 1 and a fused section 2 having different areas, the area of the fused section 1 being smaller than the area of the fused section 2. By including the fused sections 1 and 2 having different areas in such a manner, manual tearing properties easily become better.

The area of the fused section 1 is preferably 0.01-0.5 mm² and more preferably 0.1-0.4 mm². Further, if the area of the fused section 2 is larger than that of the fused section 1, there are no particular limitations as long as the effects of the present invention are exhibited. In one preferred embodiment, the area of the fused section 2 is preferably 1.5-8 times and more preferably 2-4 times the area of the fused section 1. That is, the area ratio of the fused section 2 with respect to the fused section 1 (fused section 1 area : fused section 2 area) is preferably 1:1.5-1:8 and more preferably 1:2-1:4. Further, when the area of the fused section 1 is 0.1-0.4 mm², the area of the fused section 2 is, for example, preferably 0.15-3.2 mm² and more preferably 0.2-1.6 mm².

From the perspective of being easier to provide better manual tearing properties, the shapes of the fused section 1 and the fused section 2 are the same. Thus the fused section 1 and the fused section 2 are fused sections that are the same shape and have different areas. Note that "the shapes of the fused section 1 and the fused section 2 are the same" means that when, for example, the fused section 1 is rectangular, the fused section 2 is also rectangular. The ratios of the long side to the short side of the rectangles may be the same and may be different.

The shapes of the fused sections 1 and 2 are preferably circular shapes or quadrangles and more preferably ellipses or rectangles.

In one preferred embodiment, at least one of the fused sections 1 and 2 is preferably provided such that the long side (or major axis) thereof is parallel to the TD direction of the binding tape. In a more specific embodiment, the shapes of the fused sections 1 and 2 are preferably rectangles or ellipses, and are provided such that the long sides of the rectangles or the major axes of the ellipses are parallel to the TD direction of the binding tape. With such a configuration, the manual tearing properties of the binding tape are further improved. Further, it is particularly preferable that both the fused section 1 and the fused section 2 are provided so as to be parallel to the TD direction of binding tape.

In one embodiment, when the fused sections 1 and 2 are each rectangular, the ratio of the long side to the short side of the rectangles (long side : short side) is preferably 1.5:1-8:1 and more preferably 3:1-6:1.

Note that from the perspective of avoiding the tape easily breaking after binding, it is preferable to have a certain amount of strength in the MD direction. The binding tape according to the present invention has good manual tearing properties in the TD direction of the tape while at the same time is not easily cut in the MD direction.

In one embodiment, the interval (hereinafter described as "TD1") between the fused sections 1 in the width direction of the binding tape is preferably 0.1-1.5 mm, more preferably 0.3-1.3 mm, and particularly preferably 0.5-1.1 mm.

Further, the interval (hereinafter described as "TD2") between the fused sections 2 in the width direction of the binding tape is preferably 1.0-5.0 mm, more preferably 1.0-4.5 mm, and particularly preferably 2.5-4.5 mm. If TD1 and TD2 are within the ranges described above, manual tearing properties easily become better. Further, in one embodiment, it is more preferable that TD1 is 0.8 mm and TD2 is 2.7-4.5 mm. Note that TD1 refers to an interval between two fused sections 1 aligned in the TD direction of the binding tape. The same also applies with respect to TD2. TD1 and TD2 can be measured by using an optical microscope. Further, when the fused sections 1 and 2 are formed by an embossing process, TD 1 and TD2 can be set so as to be within the ranges described above by adjusting the distance between protrusions on an embossing roll corresponding to the fused sections 1 or the distance between protrusions corresponding to the fused sections 2.

The fused sections 1 and 2 may be arranged randomly on the non-woven fabric and may be arranged in a linear manner or as a lattice. Among the foregoing, from the perspective of improving the manual tearing properties, the fused sections 1 and 2 are more preferably arranged in a linear manner so as to be parallel to the TD direction of the binding tape. Further, it is particularly preferable that the fused sections 1 and the fused sections 2 are each configured as independent linear fused sections (that is, a state in which a fused section other than the fused section 1 or the fused section 2 is not included in one linear fused section group) and arranged so as to be parallel to the TD direction. When the fused sections 1 and the fused sections 2 are each arranged as independent linear fused sections, the interval, in the MD direction, between the linear fused section group that the fused sections 1 constitute and the linear fused section group that the fused sections 2 constitute may be 0.1-3 mm and may be 0.4-1.8 mm.

The non-woven fabric also includes a fused section other than the fused sections 1 and 2. The non-woven fabric has at least two types, preferably 2-5 types, and particularly preferably 2 or 3 types of fused sections.

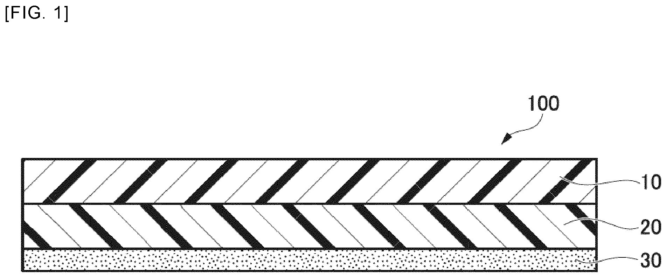

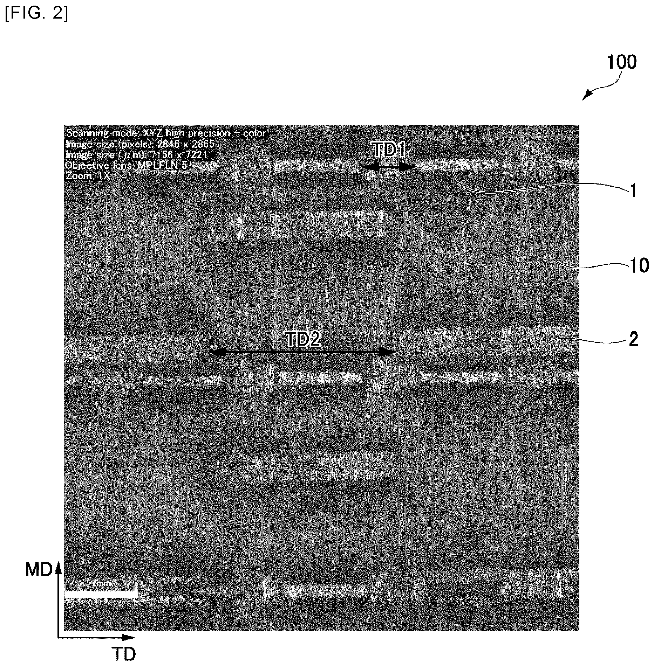

FIG. 1 is a cross-sectional view representing one embodiment of the binding tape according to the present invention. A binding tape 100 in FIG. 1 has a configuration in which a non-woven fabric 10, a resin layer 20, and an adhesive layer 30 are laminated in that order. Further, FIG. 2 is an optical micrograph showing one example of the binding tape according to the present invention. FIG. 2 is an image, taken by an optical microscope, of the binding tape 100 that has the configuration of FIG. 1, showing a surface of the non-woven fabric 10 that has fused sections provided thereto.

In FIG. 2, the vertical direction is the MD direction of the binding tape 100 and the horizontal direction is the TD direction. Rectangular fused sections 1 and rectangular fused sections 2 are provided to the surface of the non-woven fabric 10. Further, the long sides of the fused section 1 and the fused section 2 rectangles are provided so as to be linear and parallel to the width direction of the binding tape 100. As shown in FIG. 2, in the binding tape 100, TD1 is an interval in the width direction between fused sections 1 aligned in a linear manner. Similarly, TD2 is an interval in the width direction between fused sections 2 aligned in a linear manner.

As long as the effects of the present invention are exhibited, the non-woven fabric to be used in the substrate layer is not particularly limited, and it is possible to use, for example, a non-woven fabric made by a spunbond method, a non-woven fabric made by a spunlace method, and a non-woven fabric made by a melt blowing method, etc. Further, the non-woven fabric may be a single layer and may be a laminated non-woven fabric comprising a plurality of layers. Further, in the case of being a laminated non-woven fabric, non-woven fabrics made by a plurality of methods may be laminated therein. Among the foregoing, from the perspective of mechanical strength, it is preferable to use a non-woven fabric made by a spunbond method (spunbond non-woven fabric).

Further, the basis weight of the non-woven fabric is preferably 50-200 g/m² and more preferably 60-140 g/m². If the basis weight of the non-woven fabric is within the ranges mentioned above, an increase in tape weight is contained and abrasion resistance is easily improved. Further, as a void ratio of the non-woven fabric, 40-90% is preferable.

Further, as an apparent density, 0.1-0.4 g/cm³ is preferable and 0.2-0.4 g/cm³ is more preferable. If the apparent density of the non-woven fabric is within the ranges described above, high abrasion resistance is maintained while at the same time flexibility of bound articles, etc., is also easily obtained.

As long the effects of the present invention are exhibited, the fibers constituting the non-woven fabric are not particularly limited and examples thereof include aramid fibers, glass fibers, cellulose fibers, nylon fibers, vinylon fibers, polyester fibers, polyolefin fibers, and rayon fibers, etc. It is possible to use one of the foregoing alone, and it is also possible to use two or more thereof in combination. Among the foregoing, in terms of providing both high abrasion resistance and manual tearing properties, and also in terms of easily improving heat resistance, polyester fibers or polyolefin fibers are preferable, polyester fibers being more preferable.

The fiber diameter of the fibers constituting the non-woven fabric is preferably 3-30 µm and more preferably 5-20 µm since it then becomes easier to provide both high abrasion resistance and manual tearing properties. If the fiber diameter of the non-woven fabric is within the ranges described above, flexibility of bound articles is maintained while at the same time high abrasion resistance is easily obtained.

### <Resin layer>

A resin layer is laminated onto one surface of the non-woven fabric. In one embodiment, the resin layer is preferably directly laminated onto one surface of the non-woven fabric.

Due to the substrate later including the non-woven fabric and a resin layer, the abrasion resistance of the binding tape is improved.

As long as the effects of the invention are exhibited, the resin constituting the resin layer is not particularly limited. Since it becomes easier to further improve abrasion resistance, it is more preferable that the resin layer comprises at least one resin selected from polyvinyl chloride (PVC), polypropylene (PP), polyethylene (PE), polyvinyl alcohol (PVA), and an ethylene-vinyl acetate copolymer (EVA), and configuring the resin layer from at least one resin selected from PVC, PP, and PE is still more preferable. Note that small amounts of additives and comonomers may be included in the PVC, PP, PE, PVA, and EVA described above in a range that does not hinder the effects of the present invention.

As the PVC, for example, a PVC with an average degree of polymerization of 500-3000 is preferable, a PVC with an average degree of polymerization of 700-2000 is more preferable, and a PVC with an average degree of polymerization of 800-1500 is particularly preferable. The average degree of polymerization means a value calculated in accordance with JIS-K 6720-2 by dissolving 200 mg of the resin in 50 mL of nitrobenzene and using an Ubbelohde type viscometer to measure the specific viscosity of this polymer solution in a 30°C constant temperature bath.

From the perspective of manual tearing properties and flexibility, a plasticizer may be included in the PVC.

As a plasticizer, a phthalic acid-based plasticizer, an isophthalic acid-based plasticizer, a terephthalic acid-based plasticizer, an adipic acid-based plasticizer, and polyester-based plasticizers thereof, a phosphoric acid-based plasticizer, a trimellitic acid-based plasticizer, and an epoxy-based plasticizer etc. can be used.

Specific examples of the plasticizer include diisononyl phthalate (DINP), diheptyl phthalate (DHP), di-2-ethylhexyl phthalate (DOP), di-n-octyl phthalate (n-DOP), diisodecyl phthalate (DIDP), di-2-ethylhexyl isophthalate (DOIP), di-2-ethylhexyl terephthalate (DOTP), benzyl butyl phthalate (BBP), tri-2-ethylhexyl trimellitate (TOTM), di-2-ethylhexyl adipate (DOA), tricresyl phosphate (TCP), benzyl octyl adipate (BOA), adipic acid-propylene glycol-based polyesters, adipic acid-butylene glycol-based polyesters, phthalic acid-propylene glycol-based polyesters, diphenyl cresyl phosphate (DPCP), diisodecyl adipate, epoxidized soybean oil, epoxidized linseed oil, and chlorinated paraffin, etc. It is possible to use one of the foregoing alone, and it is also possible to use two or more thereof in combination. Among the plasticizers described above, DINP, which is inexpensive and has high plasticizing effects, is more preferable.

When the PVC includes a plasticizer, the amount contained is preferably 40-70 parts by mass, more preferably 50-65 parts by mass, and still more preferably 57-65 parts by mass with respect to 100 parts by mass of the polyvinyl chloride resin.

In a range not hindering the effects of the present invention, the PVC may have blended therein an inorganic filler, a modifier, and other additives, etc., as needed. Examples of the other additives include coloring agents, stabilizers, antioxidants, ultraviolet absorbers, and lubricants etc. The blending amounts thereof are arbitrary.

Examples of the PP include resins having isotactic or syndiotactic crystallinity. Further, the PP may have a small amount of comonomers copolymerized therein. The melting point of such a PP, measured by differential scanning calorimetry (DSC), may, for example, be in the range 155-175°C and preferably in the range 160-170°C.

As the PVA, for example, a PVA having a degree of saponification of 70-90 mol% is preferable.

Further, as the EVA, from the perspective of abrasion resistance and manual tearing properties, an EVA having an ethylene content in the range 5-99% and preferably in the range 10-98% is preferred.

Examples of the PE include low density polyethylene (LDPE) and high density polyethylene (HDPE). Examples of the LDPE include LDPEs having a density of 0.91 g/cm³ or more and less than 0.95 g/cm³, and preferably LDPEs having a density of 0.93-0.94 g/cm³. Further, examples of the HDPE include HDPEs having a density of 0.95 g/cm³ or more and 0.97 g/cm³ or less, and preferably HDPEs having a density of 0.95-0.96 g/cm³. Further, the melting point, measured by differential scanning calorimetry (DSC), may be in the range 110-140°C and preferably in the range 120-135°C.

The resin layer may be configured by impregnating or coating the resin described above on the non-woven fabric. The resin layer may also be configured by laminating a film or sheet including the resin described above onto the non-woven fabric.

When the resin layer is configured by impregnating or coating the resin described above on the non-woven fabric, examples of the method for forming the resin layer include application methods using a gravure coater, a comma coater, or a die coater, etc.

Meanwhile, when a film or sheet including the resin described above is laminated onto the non-woven fabric to form the resin layer, the film or sheet is preferably a film or sheet obtained by extruding using a sheet extruder and film-forming.

In one embodiment, from the perspective of manual tearing properties, the resin layer is preferably a film or sheet comprising PVC.

In one embodiment, the lamination amount of the resin layer is preferably 10-200 g/m², more preferably 70-180 g/m², and particularly preferably 100-150 g/m². If the lamination amount of the resin layer is within the ranges described above, it becomes easy to provide both manual tearing properties and high abrasion resistance.

In one embodiment, the substrate layer may be configured from only a non-woven fabric and a resin layer.

The thickness of the substrate layer is preferably 300-600 µm and more preferably 300-500 µm. If the thickness of the substrate layer is within the ranges described above, it becomes easy to provide both manual tearing properties and high abrasion resistance. Note that the thickness of the substrate layer means an average value of three locations measured using a dial gauge stipulated by JIS B 7503. Further, when the substrate layer is configured from only a non-woven fabric and a resin layer, the thickness of the substrate layer refers to a value obtained by using a dial gauge to measure a section of the non-woven fabric that does not have fused sections provided thereto.

In the binding tape according to the present invention, as described above, the fused sections provided to the substrate layer are preferably formed by thermally fusing fibers constituting the non-woven fabric by a hot embossing process. That is, the fused sections are preferably formed by sandwiching and compressing the non-woven fabric between a flat roll and a hot embossing roll that has formed on the surface thereof protrusions for forming the fused sections of the present invention. The hot embossing process may be performed in one step by using an embossing roll that has formed on the surface thereof at least two types of protrusions having different shapes. The hot embossing process may also be performed in multiple steps by using a plurality of embossing rolls.

The temperature when carrying out the hot embossing process may be adjusted, as appropriate, according to the fibers constituting the non-woven fabric, but for example, when using a non-woven fabric comprising polyester fibers, the temperature is preferably 180-250°C and more preferably 200-240°C.

### (Adhesive layer)

The adhesive layer of the present invention is preferably configured from an adhesive. As long as the effects of the invention are exhibited, the adhesive is not particularly limited and it is possible to use, as appropriate, an adhesive conventionally used in binding tapes. Specifically, it is possible to use, for example, an acrylic adhesive, a rubber-based adhesive, a silicone-based adhesive, a urethane-based adhesive, etc., as the adhesive.

An adhesive having an acrylic polymer as a main component, for example, may be used as the acrylic adhesive.

Examples of the acrylic polymer include a polymer of a (meth)acrylic acid alkyl ester and a carboxyl group-containing unsaturated monomer, etc.

Examples of a (meth)acrylic acid alkyl ester include methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, 2-ethylhexyl acrylate, 2-ethylhexyl methacrylate, n-octyl acrylate, n-octyl methacrylate, isooctyl acrylate, isooctyl methacrylate, n-nonyl acrylate, n-nonyl methacrylate, isononyl acrylate, and isononyl methacrylate, etc. It is possible to use one of the foregoing alone, and it is also possible to use two or more thereof in combination.

If copolymerizable with the (meth)acrylic acid alkyl ester described above and as long as the effects of the present invention are exhibited, the carboxyl group-containing unsaturated monomer is not particularly limited, and it is possible to use, for example, acrylic acid, methacrylic acid, itaconic acid, fumaric acid, and maleic acid, etc. It is possible to use one of the foregoing alone, and it is also possible to use two or more thereof in combination.

The acrylic polymer may be configured as a copolymer comprising a monomer other than the carboxy group-containing unsaturated monomer and the (meth)acrylic acid alkyl ester illustrated above.

Examples of another monomer include hydroxyl group-containing monomers such as 2-hydroxyethyl (meth)acrylate, 2-hydroxypropyl (meth)acrylate, and hydroxyhexyl (meth)acrylate, etc., nitrogen-containing (meth)acrylates such as (meth)acrylamide, acryloyl morpholine, and (meth)acrylonitrile, etc., vinyl acetate, styrene, vinylidene chloride, and vinyl propionate, etc. It is possible to use one of the foregoing alone, and it is also possible to use two or more thereof in combination.

In one embodiment of the present invention, when an acrylic adhesive is used as the adhesive constituting the adhesive layer, from the perspective of preventing a phenomenon (bleed-through) wherein a low molecular weight component included in the acrylic adhesive permeates the non-woven fabric of the substrate layer, the acrylic polymer is preferably cross-linked.

Examples of a method for cross-linking the acrylic polymer include a method wherein an active energy ray (ultraviolet ray, electron ray, etc.) is irradiated, and a method wherein an arbitrary cross-linking agent is added, etc.

Examples of the arbitrary cross-linking agent include epoxy-based cross-linking agents, polyfunctional isocyanate-based cross-linking agents, melamine resin-based cross-linking agents, metal salt-based cross-linking agents, metal chelate-based cross-linking agents, amino resin-based cross-linking agents, and peroxide-based cross-linking agents, etc. It is possible to use one of the foregoing alone, and it is also possible to use two or more thereof in combination.

Examples of the rubber-based adhesive include adhesives in which at least one tackifier selected from the group consisting of rosin-based resins, terpene-based resins, petroleum-based resins, etc., is blended, as appropriate, in at least one rubber component selected from natural rubbers and synthetic rubbers. Examples of the synthetic rubbers include at least one rubber selected from the group consisting of styrene-isoprene-styrene block copolymers (SIS), styrene-butadiene-styrene block copolymers (SBS), hydrogenated products of the styrene-based block copolymers (SIPS, SEBS), styrene-butadiene rubbers (SBR), polyisoprene rubbers (IR), polyisobutylene (PIB), chloroprene rubbers (CR), and butyl rubbers (IIR), etc. Among the foregoing, from the perspective of easily providing both high adhesive strength and back surface adhesive residue prevention, a combination of a natural rubber and at least one synthetic rubber selected from SBR, CR, and IIR is preferable, and a combination of a natural rubber and SBR is particularly preferable.

Examples of the silicone-based adhesives include adhesives in which a silicone resin or a silicone oil, etc., is blended, as appropriate, in a silicone rubber.

Examples of the urethane-based adhesive include adhesives obtained by reacting a polyol such as a polyether-based polyol or a polyester-based polyol, etc., with a polyisocyanate such as tolylene diisocyanate (TDI), methylene diphenyl diisocyanate (MDI), hexamethylene diisocyanate (HDI), or xylylene diisocyanate (XDI), etc.

With respect to the adhesive for forming the adhesive layer, an arbitrary additive may be included in the adhesive described above.

Examples of the additive include softeners, tackifiers, surface lubricants, leveling agents, antioxidants, corrosion inhibitors, photostabilizers, ultraviolet absorbers, thermal stabilizers, polymerization inhibitors, silane coupling agents, lubricants, inorganic or organic fillers, metal powders, and pigments, etc. It is possible to use one of the foregoing alone, and it is also possible to use two or more thereof in combination.

Examples of tackifiers include petroleum-based resins such as aliphatic copolymers, aromatic copolymers, aliphatic/aromatic copolymers, and alicyclic copolymers, etc., rosin-based resins such as coumarone-indene-based resins, terpene-based resins, terpene-phenolic resins, and polymerized rosin, etc., (alkyl) phenolic resins, xylene-based resins, or hydrogenated products thereof, etc. It is possible to use one of the foregoing alone, and it is also possible to use two or more thereof in combination.

In one embodiment of the present invention, from the perspective of high adhesive strength and back surface adhesive residue prevention, it is preferable to use a rubber-based adhesive as an adhesive for constituting the adhesive layer.

The lamination amount of the adhesive layer is preferably 10-100 g/m², more preferably 20-80 g/m², and particularly preferably 20-60 g/m². If the lamination amount of the adhesive layer is within the ranges described above, it becomes easier to provide both manual tearing properties and high abrasion resistance.

Further, the adhesive layer may be configured from a plurality of layers. When the adhesive layer is configured from a plurality of layers, the overall lamination amount of the adhesive layer is preferably adjusted so as to be within the ranges described above.

In one embodiment, the overall thickness of the tape according to the present invention is preferably 200-700 µm, more preferably 250-500 µm, and still more preferably 300-450 µm. The binding tape according to the present invention having the configuration described above easily provides both high abrasion resistance and manual tearing properties even when the overall thickness thereof is in the range 200-700 µm.

Further, in one embodiment, from the perspective of providing both manual tearing properties and high abrasion resistance, the overall lamination amount (total lamination amount of the substrate layer and the adhesive layer) of the binding tape is preferably 100-400 g/m², more preferably 180-320 g/m², and particularly preferably 220-280 g/m².

In one embodiment, the binding tape according to the present invention preferably has a scrape abrasion resistance repetition number, measured in compliance with ISO 6722, of 100 times or more, and more preferably of 1000 times or more. Specifically, the scrape abrasion repetition number refers to a value measured by the method described below.

### <Method for measuring scrape abrasion resistance repetition number>

One layer of a binding tape having a width of 19 mm and a length of 50 mm is adhered to a 10 mm diameter steel rod in the longitudinal direction thereof. Next, a piano wire having a diameter of 0.45 mm is brought into contact with the substrate layer side of the binding tape, a load of 7 N is applied thereto, and the piano wire is moved back and forth over a longitudinal direction distance of 15.5 mm at a speed of 60 repetitions/minute. At that time, the piano wire scrapes the binding tape and the number of times back and forth until the binding tape is penetrated is regarded to be the scrape abrasion resistance repetition number.

Further, in one embodiment, the binding tape according to the present invention preferably has a TD direction tearing load, measured in accordance with JIS K 7128-2 (ISO 6383-2: 1983), of 30 N or less and more preferably of 3-25 N. If the tearing load is 30 N or less, it becomes easy to achieve good manual tearing properties. Specifically, the tearing load indicates a value measured by the method described below.

### <Method for measuring tearing load>

A slit having a length of 9 mm is made in the width direction at a central section in the length direction of a binding tape having a width of 19 mm and a length of 75 mm. Next, the binding tape is secured by being sandwiched in a sample chuck part of an Elmendorf tester (No. 163, manufactured by Toyo Seiki Co., Ltd.) so that the width direction of the binding tape is parallel to the ground. Under conditions of a temperature of 23°C and a humidity of 50% RH, a fan-shaped pendulum weighing 2.4 kg is raised to a position having an angle of 70 degrees with the ground surface serving as the point of origin and allowed to free fall from that position to slice a test piece. The value of a scale at that time is read and the load required for tearing is calculated.

### [Method for producing binding tape]

As the method for producing the binding tape according to the present invention, for example, fused sections are formed on one surface of a non-woven fabric by the hot embossing process described above. Next, a resin film is film-formed by a sheet extrusion method. Next, a resin is laminated onto one surface of the non-woven fabric by a thermal lamination method to configure a substrate layer comprising a non-woven fabric and a resin layer. Thereafter, the binding tape can be produced by a method in which the adhesive described above is applied directly to the substrate layer to form an adhesive layer or by a method in which an adhesive once coated on a separate sheet is then transferred to the substrate layer, etc. Note that when the substrate layer is configured from a non-woven fabric and a resin layer, the adhesive for forming the adhesive layer is preferably applied on the resin layer to form the adhesive layer.

Examples of methods for applying the adhesive to the substrate layer or to a separate sheet include a roll coating method, a spray coating method, a gravure coating method, a reverse coating method, a rod coating method, a bar coating method, a die coating method, a kiss coating method, a reverse kiss coating method, and an air knife coating method, etc.

### [Uses]

As described above, the binding tape according to the present invention has high abrasion resistance and also has good manual tearing properties. As such, the binding tape according to the present invention can be suitably used as a binding tape in fields which demand these properties, for example, for electrical wires of automobiles, etc. Naturally, the use of the binding tape according to the present embodiment is not limited to a use for binding electrical wires of automobiles, etc.

In another more preferred embodiment, the binding tape according to the present invention is a binding tape having a substrate layer comprising a non-woven fabric and a resin layer laminated onto one surface of the non-woven fabric, and an adhesive layer laminated onto the resin layer, wherein the non-woven fabric includes a fused section 1 and a fused section 2 having different areas, the long sides of the fused section 1 and the fused section 2 being parallel to the width direction of the binding tape. The overall thickness of the binding tape is more preferably 250-500 µm. The non-woven fabric is more preferably a non-woven fabric made by a spunbond method using polyester fibers or polyolefin fibers. Further, the resin layer is more preferably configured from at least one resin selected from PVC, PE, and PP.

### EXAMPLES

Examples are provided below to describe the present invention in detail. However, the present invention is not limited by the following descriptions.

### [Example 1]

### (Fabrication of substrate layer)

Fused sections 1 and fused sections 2 were formed, by an embossing process method, in a non-woven fabric made by a spunbond method using polyethylene terephthalate fibers having a fiber diameter of 10 µm, a basis weight of 70 g/m², and an apparent density of 0.28 g/m³. The shape of the fused sections 1 was rectangular and the area thereof was 0.3 mm². Further, the shape of the fused sections 2 was rectangular and the area thereof was 0.8 mm². These fused sections 1 and fused sections 2 were formed such that the long sides of the rectangles were parallel to the TD direction. Furthermore, the fused sections 1 and the fused sections 2 were each formed as independent linear fused sections. Further, TD1 was 0.8 mm and TD2 was 2.7 mm.

Next, a resin layer was formed on a surface of a side of the non-woven fabric not provided with the fused sections by laminating, by a thermal lamination method, a PVC film having a thickness of 110 µm and which was film-formed by extruding using a sheet extruder (ø 40 mm extruder with a T die width of 500 mm (manufactured by Tanabe Plastics Machinery Co., Ltd.)). The lamination amount of the resin layer was 140 g/m². Note that a PVC having the following composition was used as the PVC constituting the resin layer.

### (Composition of PVC Resin)

58 parts by mass of DINP (manufactured by J-Plus Co., Ltd.), 2 parts by mass of epoxidized soybean oil (product name: "Chemisizer SNE-50", manufactured by Sanwa Goseikagaku Co., Ltd.), 2 parts by mass of a Ca-Zn-Mg-based composite stabilizer (product name: "OW-5200", manufactured by Sakai Chemical Industry Co., Ltd.), and 28 parts by mass of calcium carbonate (product name: "Calseeds^{®} P", manufactured by Konoshima Chemical Co., Ltd.) were blended into 100 parts by mass of PVC (vinyl chloride homopolymer, average degree of polymerization 1300, product name: "TH-1300", manufactured by Taiyo Vinyl Corporation).

### (Fabrication of binding tape)

A rubber-based adhesive emulsion was prepared by mixing 10 parts by mass (solid content) of a natural rubber latex (product name: "HA LATEX", manufactured by Regitex Co., Ltd), 40 parts by mass (solid content) of a styrene-butadiene rubber latex (product name: "T-093A", manufactured by JSR Corporation), and 50 parts by mass (solid content) of a petroleum resin-based emulsion tackifier (product name: "AP-1100-NT", manufactured by Arakawa Chemical Industries, Ltd.). Next, a binding tape was obtained by forming an adhesive layer on the resin layer (that is, a surface of the side on which the non-woven fabric is not laminated) of the substrate layer by using a comma coating method. The lamination amount of the adhesive layer was 50 g/m². The overall lamination amount of the obtained binding tape was 260 g/m² and the overall thickness was 360 µm. Abrasion resistance and manual tearing properties of the binding tape were evaluated following the procedures described below. The results are shown in Table 1.

### <Evaluation of abrasion resistance>

One layer of the binding tape having a width of 19 mm and a length of 50 mm was adhered to a 10 mm diameter steel rod in the longitudinal direction thereof. A piano wire having a diameter of 0.45 mm was brought into contact with the non-woven fabric side of the binding tape, and under conditions of 23°C and a humidity of 50% RH, a load of 7 N was applied thereto and the piano wire was moved back and forth over a longitudinal direction distance of 15.5 mm at a speed of 60 repetitions/minute. At that time, the piano wire scraped the binding tape and the number of repetitions back and forth until the binding tape was penetrated was regarded to be the scrape abrasion resistance repetition number. Further, abrasion resistance was evaluated following the evaluation criteria below, with B or higher being regarded as a pass (having high abrasion resistance). Note that in the evaluation criteria below, a binding tape with an A evaluation (having a scrape abrasion resistance repetition number of 1000 or more) has an abrasion resistance of class D in European Automotive Standard LV312.

### (Evaluation criteria)

A: The scrape abrasion resistance repetition number is 1000 times or more.
B: The scrape abrasion resistance repetition number is 100 times or more and less than 1000 times.
C: The scrape abrasion resistance repetition number is less than 100 times.

### <Evaluation of manual tearing properties>

Tearing loads in the TD direction of the binding tape were evaluated in accordance with JIS K 7128-2 (ISO 9383-2: 1983). Specifically, a slit having a length of 9 mm was made in the width direction at a central section in the length direction of a binding tape having a width of 19 mm and a length of 75 mm. Next, the binding tape was secured by being sandwiched in a sample chuck part of an Elmendorf tester (No. 163, manufactured by Toyo Seiki Co., Ltd.) so that the width direction of the binding tape was parallel to the ground. Under conditions of a temperature of 23°C and a humidity of 50% RH, a fan-shaped pendulum weighing 2.4 kg was raised to a position having an angle of 70 degrees with the ground surface serving as the point of origin and allowed to free fall from that position to slice a test piece. The value of a scale at that time was read and the load required for tearing was calculated. Further, manual tearing properties were evaluated in accordance with the evaluation criteria below, with a B evaluation or higher being regarded as a pass (having good manual tearing properties). Note that binding tapes with a C evaluation were determined as not having manual tearing properties (cutting the tape requires a jig).

### (Evaluation criteria)

A: The tearing load in the TD direction is less than 15 N.
B: The tearing load in the TD direction is 15 N or more and 30 N or less.
C: The tearing load in the TD direction is more than 30 N.

### [Examples 2-12 and Comparative Example 1]

Apart from the configurations of the non-woven fabric, the resin layer, and the fused sections being those shown in Tables 1 and 2, the binding tape was fabricated using the same method as Example 1. Further, abrasion resistance and manual tearing properties for the binding tape of each example were evaluated by the same methods as Example 1. In Tables 1 and 2, "NR/SBR" means natural rubber and synthetic rubber (styrene-butadiene rubber). The same adhesive as that used in Example 1 was used as the adhesive (NR/SBR) in Examples 2-12 and Comparative Example 1.

Note that in Tables 1 and 2, "PET" means polyethylene terephthalate fibers and "PP" means polypropylene fibers.

The same PVC resin as that used in Example 1 was used as the "PVC" in Examples 2-6, 8, and 9. Further, resins with the following compositions were used as the "EVA" in Example 7, the "LDPE" in Example 10, the "HDPE" in Example 11, and the "PP" in Example 12.

### (EVA Resin)

An EVA resin (product name: "Novatec LV211A", manufactured by Japan Polyethylene Corporation) having an ethylene content of 94% was used.

### (LDPE Resin)

An LDPE resin (product name "Novatec LL UH943", manufactured by Japan Polyethylene Corporation) having a density of 0.94 g/cm³ and a melting point measured by differential scanning calorimetry (DSC) of 127°C was used.

### (HDPE Resin)

An HDPE resin (product name: "Novatec HD HF313", manufactured by Japan Polyethylene Corporation) having a density of 0.95 g/cm³ and a melting point measured by differential scanning calorimetry (DSC) of 132°C was used.

### (PP Resin)

A PP resin (product name "PL400A", manufactured by SunAllomer Ltd.) having a melting point measured by differential scanning calorimetry (DSC) of 168°C was used.

**[Table 1]**

| | | | | | Example 1 | Example 2 | Example 3 | Example 4 | Example 5 | Example 6 | Example 7 |
|---|---|---|---|---|---|---|---|---|---|---|---|
| Substrate layer | Non-woven fabric | Material | | (-) | PET spunbond | PET spunbond | PET spunbond | PP spunbond | PP spunbond | PET spunbond | PET spunbond |
| | | Basis weight | | (g/m²) | 70 | 70 | 70 | 70 | 50 | 220 | 70 |
| | | Fused section 1 | Shape | (-) | Rectangular | Rectangular | Rectangular | Rectangular | Rectangular | Rectangular | Rectangular |
| | | | Area | (mm²) | 0.3 | 0.3 | 0.3 | 0.3 | 0.3 | 0.3 | 0.3 |
| | | | TD1 | (mm) | 0.8 | 1.8 | 1.8 | 0.8 | 0.8 | 0.8 | 0.8 |
| | | Fused section 2 | Shape | (-) | Rectangular | Rectangular | Rectangular | Rectangular | Rectangular | Rectangular | Rectangular |
| | | | Area | (mm2) | 0.8 | 0.8 | 0.8 | 0.8 | 0.8 | 0.8 | 0.8 |
| | | | TD2 | (mm) | 2.7 | 2.7 | 4.5 | 2.7 | 2.7 | 2.7 | 2.7 |
| | Resin layer | Material | | (-) | PVC | PVC | PVC | PVC | PVC | PVC | EVA |
| | | Lamination amount | | (g/m²) | 140 | 140 | 140 | 140 | 140 | 140 | 140 |
| Adhesive layer | | Material | | (-) | NR/SBR | NR/SBR | NR/SBR | NR/SBR | NR/SBR | NR/SBR | NR/SBR |
| | | Lamination amount | | (g/m²) | 50 | 50 | 50 | 50 | 50 | 50 | 50 |
| Tape as a whole | | Overall lamination amount | | (g/m²) | 260 | 260 | 260 | 260 | 240 | 260 | 260 |
| | | Overall thickness | | (*µ*m) | 360 | 360 | 360 | 360 | 330 | 450 | 360 |
| Evaluation results | | Scrape abrasion resistance repetition number | | (No. of times) | 1000 | 1564 | 1181 | 1113 | 672 | 3511 | 938 |
| | | Abrasion resistance evaluation | | (-) | A | A | A | A | B | A | B |
| | | Tearing load | | (N) | 17.3 | 25.1 | 22.0 | 23.2 | 12.1 | 28.1 | 21.1 |
| | | Manual tearing properties evaluation | | (-) | B | B | B | B | A | B | B |

**[Table 2]**

| | | | | | Example 8 | Example 9 | Example 10 | Example 11 | Example 12 | Comp. Ex. 1 |
|---|---|---|---|---|---|---|---|---|---|---|
| Substrate layer | Non-woven fabric | Material | | (-) | PET spunbond | PET spunbond | PET spunbond | PET spunbond | PET spunbond | PET spunbond |
| | | Basis weight | | (g/m²) | 70 | 70 | 70 | 70 | 70 | 70 |
| | | Fused section 1 | Shape | (-) | Rectangular | Rectangular | Rectangular | Rectangular | Rectangular | Rectangular |
| | | | Area | (mm²) | 0.3 | 0.3 | 0.3 | 0.3 | 0.3 | 0.3 |
| | | | TD1 | (mm) | 0.8 | 0.8 | 0.8 | 0.8 | 0.8 | 0.8 |
| | | Fused section 2 | Shape | (-) | Rectangular | Rectangular | Rectangular | Rectangular | Rectangular | - |
| | | | Area | (mm2) | 0.8 | 0.8 | 0.8 | 0.8 | 0.8 | - |
| | | | TD2 | (mm) | 2.7 | 2.7 | 2.7 | 2.7 | 2.7 | - |
| | Resin layer | Material | | (-) | PVC | PVC | LDPE | HDPE | PP | PVC |
| | | Lamination amount | | (g/m²) | 20 | 220 | 20 | 20 | 20 | 140 |
| Adhesive layer | | Material | | (-) | NR/SBR | NR/SBR | NR/SBR | NR/SBR | NR/SBR | NR/SBR |
| | | lamination amount | | (g/m²) | 50 | 50 | 50 | 50 | 50 | 50 |
| Tape as a whole | | Overall lamination amount | | (g/m²) | 140 | 340 | 140 | 140 | 140 | 260 |
| | | Overall thickness | | (*µ*m) | 300 | 430 | 270 | 270 | 270 | 360 |
| Evaluation results | | Scrape abrasion resistance repetition number | | (No. of times) | 218 | 5367 | 6512 | 32122 | 15361 | 1026 |
| | | Abrasion resistance evaluation | | (-) | B | A | A | A | A | A |
| | | Tearing load | | (N) | 10.2 | 23.5 | 4.9 | 5.2 | 9.3 | 31.3 |
| | | Manual tearing properties evaluation | | (-) | A | B | A | A | A | C |

As shown in Tables 1 and 2, the binding tapes of Examples 1-12, which satisfy the configuration of the present invention, have high abrasion resistance and also have good manual tearing properties. Furthermore, it was discovered that the binding tapes of Examples 1-4, 6, and 9-12 also have excellent abrasion resistance corresponding to class D of European Automotive Standard LV312. Meanwhile, although abrasion resistance was good in the binding tape of Comparative Example 1, in which only one type of fused section was formed in the non-woven fabric, there were no manual tearing properties, and a specialized jig was needed to cut the tape. From the above results, it was confirmed that the binding tape according to the present invention has high abrasion resistance and also has good manual tearing properties.

### REFERENCE SIGNS LIST

- 1:: Fused section 1
- 2:: Fused section 2
- 10:: Non-woven fabric
- 20:: Resin layer
- 30:: Adhesive layer
- 100:: Binding tape

## Claims

1. A binding tape (100) having a substrate layer comprising a non-woven fabric (10) and a resin layer (20) laminated onto one surface of the non-woven fabric (10), and an adhesive layer (30) , wherein the non-woven fabric (10) is provided with at least two types of fused sections having different shapes,
**characterized in that**
the fused sections include a fused section 1 (1) and a fused section 2 (2) that are the same shape and have different areas, the area of the fused section 1 (1) being smaller than the area of the fused section 2 (2).

2. The binding tape (100) according to claim 1, wherein an interval between the fused sections 1 (1) in the width direction of the binding tape (100) is 0.1-1.5 mm.

3. The binding tape (100) according to claim 1 or 2, wherein an interval between the fused sections 2 (2) in the width direction of the binding (100) tape is 1.0-5.0 mm.

4. The binding tape (100) according to any one of claims 1 to 3 wherein fibers constituting the non-woven fabric (10) are polyester fibers or polyolefin fibers.

5. The binding tape (100) according to any one of claims 1 to 4, wherein the non-woven fabric (10) has a basis weight of 50-200 g/m².

6. The binding tape (100) according to any one of claims 1 to 5, wherein the resin layer (20) comprises at least one resin selected from polyvinyl chloride, polypropylene, polyethylene, polyvinyl alcohol, and an ethylene-vinyl acetate copolymer.

7. The binding tape (100) according to any one of claims 1 to 6, wherein the resin layer (20) is configured from at least one resin selected from polyvinyl chloride, polypropylene, and polyethylene.

8. The binding tape (100) according to any one of claims 1 to 7, wherein the lamination amount of the resin layer (20) is 10-200 g/m².

9. The binding tape (100) according to any one of claims 1 to 8, wherein the shape of the fused section 1 (1) and the fused section 2 (2) is rectangular or elliptical, and at least one of the fused section 1 (1) and the fused section 2 (2) is provided so as to be parallel to the width direction of the binding tape (100).

10. The binding tape (100) according to any one of claims 1 to 9, wherein the binding tape (100) is for binding electrical wires, or the like.

## Patentansprüche

1. Ein Bindeband (100) mit einer Substratschicht, die einen Vliesstoff (10) und eine Harzschicht (20), die auf eine Oberfläche des Vliesstoffs (10) laminiert ist, und eine Klebeschicht (30) beinhaltet, wobei der Vliesstoff (10) mit mindestens zwei Arten von verschmolzenen Abschnitten bereitgestellt ist, die unterschiedliche Formen aufweisen, **dadurch gekennzeichnet, dass**
die verschmolzenen Abschnitte einen verschmolzenen Abschnitt 1 (1) und einen verschmolzenen Abschnitt 2 (2) beinhalten, die die gleiche Form haben und unterschiedliche Flächen aufweisen, wobei die Fläche des verschmolzenen Abschnitts 1 (1) kleiner als die Fläche des verschmolzenen Abschnitts 2 (2) ist.

2. Bindeband (100) gemäß Anspruch 1, wobei ein Zwischenraum zwischen den verschmolzenen Abschnitten 1 (1) in der Breitenrichtung des Bindebands (100) 0,1-1,5 mm beträgt.

3. Bindeband (100) gemäß Anspruch 1 oder 2, wobei ein Zwischenraum zwischen den verschmolzenen Abschnitten 2 (2) in der Breitenrichtung des Bindebands (100) 1,0-5,0 mm beträgt.

4. Bindeband (100) gemäß einem der Ansprüche 1 bis 3, wobei Fasern, die den Vliesstoff (10) bilden, Polyesterfasern oder Polyolefinfasern sind.

5. Bindeband (100) gemäß einem der Ansprüche 1 bis 4, wobei der Vliesstoff (10) ein Flächengewicht von 50-200 g/m² aufweist.

6. Bindeband (100) gemäß einem der Ansprüche 1 bis 5, wobei die Harzschicht (20) mindestens ein Harz beinhaltet, das aus Polyvinylchlorid, Polypropylen, Polyethylen, Polyvinylalkohol und einem Ethylen-Vinylacetat-Copolymer ausgewählt ist.

7. Bindeband (100) gemäß einem der Ansprüche 1 bis 6, wobei die Harzschicht (20) aus mindestens einem Harz konfiguriert ist, das aus Polyvinylchlorid, Polypropylen und Polyethylen ausgewählt ist.

8. Bindeband (100) gemäß einem der Ansprüche 1 bis 7, wobei die Laminierungsmenge der Harzschicht (20) 10-200 g/m² beträgt.

9. Bindeband (100) gemäß einem der Ansprüche 1 bis 8, wobei die Form des verschmolzenen Abschnitts 1 (1) und des verschmolzenen Abschnitts 2 (2) rechteckig oder elliptisch ist und mindestens einer von dem verschmolzenen Abschnitt 1 (1) und dem verschmolzenen Abschnitt 2 (2) so bereitgestellt ist, dass er parallel zu der Breitenrichtung des Bindebands (100) ist.

10. Bindeband (100) gemäß einem der Ansprüche 1 bis 9, wobei das Bindeband (100) zum Binden von elektrischen Drähten oder dergleichen ist.

## Revendications

1. Un ruban d'attache (100) présentant une couche de substrat comprenant un tissu non tissé (10) et une couche de résine (20) stratifiée sur une surface du tissu non tissé (10), et une couche adhésive (30), où le tissu non tissé (10) est pourvu d'au moins deux types de sections fusionnées présentant des formes différentes,
**caractérisé en ce que**
les sections fusionnées incluent une section fusionnée 1 (1) et une section fusionnée 2 (2) qui sont de formes identiques et présentent des aires différentes, l'aire de la section fusionnée 1 (1) étant plus petite que l'aire de la section fusionnée 2 (2).

2. Le ruban d'attache (100) selon la revendication 1, où un intervalle entre les sections fusionnées 1 (1) dans le sens de la largeur du ruban d'attache (100) est de 0,1 à 1,5 mm.

3. Le ruban d'attache (100) selon la revendication 1 ou la revendication 2, où un intervalle entre les sections fusionnées 2 (2) dans le sens de la largeur du ruban d'attache (100) est de 1,0 à 5,0 mm.

4. Le ruban d'attache (100) selon n'importe laquelle des revendications 1 à 3 où des fibres constituant le tissu non tissé (10) sont des fibres de polyester ou des fibres de polyoléfine.

5. Le ruban d'attache (100) selon n'importe laquelle des revendications 1 à 4, où le tissu non tissé (10) présente un poids surfacique de 50 à 200 g/m².

6. Le ruban d'attache (100) selon n'importe laquelle des revendications 1 à 5, où la couche de résine (20) comprend au moins une résine sélectionnée parmi le polychlorure de vinyle, le polypropylène, le polyéthylène, l'alcool polyvinylique, et un copolymère éthylène-acétate de vinyle.

7. Le ruban d'attache (100) selon n'importe laquelle des revendications 1 à 6, où la couche de résine (20) est configurée à partir d'au moins une résine sélectionnée parmi le polychlorure de vinyle, le polypropylène, et le polyéthylène.

8. Le ruban d'attache (100) selon n'importe laquelle des revendications 1 à 7, où la quantité de stratification de la couche de résine (20) est de 10 à 200 g/m².

9. Le ruban d'attache (100) selon n'importe laquelle des revendications 1 à 8, où la forme de la section fusionnée 1 (1) et de la section fusionnée 2 (2) est rectangulaire ou elliptique, et la section fusionnée 1 (1) et/ou la section fusionnée 2 (2) est fournie de manière à être parallèle au sens de la largeur du ruban d'attache (100).

10. Le ruban d'attache (100) selon n'importe laquelle des revendications 1 à 9, où le ruban d'attache (100) est destiné à attacher des fils électriques, ou analogues.
